# EUROPEAN PATENT SPECIFICATION

(11) **EP 2 710 882 B1**
(45) Date of publication and mention of the grant of the patent: **09.09.2015**
(21) Application number: 13185536.3
(22) Date of filing: 23.09.2013
(51) Int. Cl.: A01G 1/02, A01G 13/00

(54) **Device and method for lifting a foil element and a further foil element from an asparagus bed, as a well as a mini-tunnel system for such a device and method**
Vorrichtung und Verfahren zum Anheben eines Folienelements und eines weiteren Folienelements aus einem Spargeldamm, sowie ein Mini-Tunnelsystem für eine solche Vorrichtung und Verfahren
Dispositif et procédé de levage d'un élément en feuille et autre élément en feuille à partir d'un lit d'asperges, comme un système de mini-tunnel pour un tel dispositif et procédé

(30) Priority: 21.09.2012 NL 2009501
(43) Date of publication of application: 26.03.2014
(73) Proprietor: Engels Familie Holding B.V., 5981 NC Panningen (NL)
(72) Inventor: Engels, Franciscus Maria, 5988 NL Helden (NL); Engels, Marcus Franciscus, 5988 NL Helden (NL); Engels, Christiaan Michiel, 5913 RR Venlo (NL)
(74) Representative: Algemeen Octrooi- en Merkenbureau B.V.

(56) References cited:
- EP-A1- 0 898 873
- EP-A1- 0 922 382
- DE-A1- 4 424 123
- DE-A1- 19 532 766
- DE-A1-102008 029 797
- NL-C2- 1 010 659
- US-A- 3 701 241

## Description

The invention relates to a device according to the preamble of claim 1. The invention further relates to a mini-tunnel system for such a device, according to the preamble of claim 7. The invention further relates to a method according to the preamble of claim 9.

A mini-tunnel system for cultivating asparagus is generally known. Such a mini-tunnel system comprises a cover foil laid on the asparagus bed, which cover foil is white on one side and black on the other side, and an outer foil in the form of a transparent plastic film. In modern asparagus cultivation, such a black-white coloured cover foil is used for stimulating and/or controlling the growth of asparagus. By cleverly responding to the weather conditions it is possible to influence the growth of the asparagus by placing the cover foil with the black side facing up for heating or with the white side facing up for cooling.

In the known mini-tunnel, an outer foil in the form of a transparent plastic film is furthermore used, as already mentioned above. A space with a layer of air is present between the outer foil and the inner black-white foil. Said layer of air is heated by the light and/or the sunrays, with the outer transparent foil retaining the heated air, even when outside temperatures are relatively low. This leads to a significantly improved use of the sun's energy, to a more rapid and stronger heating of the ground and to a reduced extent of cooling of the asparagus bed, for example during the night or in cold weather conditions. This system is used for advancing the asparagus harvest.

German patent DE 10 2010 047 591 B3 discloses the use of support brackets disposed on either side of the asparagus bed, which brackets do not fully extend in transverse direction over the asparagus bed. The outer transparent foil can be placed on the support brackets. With the mini-tunnel known from said document, the transparent foil and the underlying cover foil can be lifted and laid down by a machine.

A known device for lifting and laying down the foil comprises a movable frame with an elongated gutter provided at the upper side thereof. The gutter is relatively narrow, its width being substantially less than that of the foil. In this way the working space at the asparagus bed is made as large as possible. The foil is squeezed together in transverse direction upon being lifted. The device further comprises a foil laying device, by means of which the foil is given its original width and the shape of the asparagus bed again.

A drawback of the known device is that replacing the two foils correctly again is relatively difficult with this device. In particular placing the cover foil with the desired side (white-black) facing up is problematic with the known device. DE 195 32 766 A1 discloses another device for lifting a foil element.

Accordingly it is an object of the present invention to provide an improved device by means of which laying the white-black coloured cover foil and the transparent outer foil can be done in a simpler and quicker manner.

In order to achieve that object, the device provides a device of the kind described in the introduction, which is characterised by the characterising part of claim 1. According to the invention, the device comprises foil separating means provided on the frame for separating the foil element (preferably the cover foil) and the further foil element (preferably the transparent foil) from each other near the foil laying element, for example at the location of the foil laying element, or preferably between the foil laying element and the carrying means, when the foil element and the further foil element are being carried back to the asparagus bed.

Using the device according to the invention it is possible to lift the two foils and hold them by means of the carrying means, which are preferably configured in the form of an elongate gutter element. The width of the gutter element is preferably smaller than the width of the foil and/or smaller than the width of the asparagus bed. Downstream of the end of the gutter element, the separating means effect a separation of the two foils at a point where they are both still removed some distance from the asparagus bed. Because the foils are separated from each other it will be easier for a user to gain access at the location of the foil laying element to the foil to be laid on the asparagus bed. At the location of the foil laying element, the user can place the foil element on the foil laying element with the desired side (white or black) facing up. The foil laying element then guides the foil element back to the asparagus bed, such that the desired side will face up. The further foil element is then placed over the foil element. Placing the cover foil and the transparent outer foil can thus take place in a quicker and simpler manner, thereby achieving the object of the present invention.

The separating means are preferably comprised of the foil laying element and a further foil laying element. The foil laying element (also called "foil layer") is designed to give the cover foil, which according to one aspect of the invention is preferably weighted with a number of spaced-apart mass elements on at least one longitudinal side thereof, the shape of the asparagus bed, and to subsequently replace it on the bed. The further foil laying element is configured and placed so that it separates the transparent foil from the cover foil at the location of the further foil laying element. In this way it is possible to separate the two foil elements from each other in a simple manner by means of the first foil laying element and the further foil laying element, whilst the first foil element (black-white cover foil) can be easily placed with the correct side facing up.

In one embodiment, the second foil laying element is designed to give the transparent foil a relatively wider shape relative to the cover foil, and that in such a manner that the transparent foil can be laid over a multitude of holding elements placed in the longitudinal direction of the asparagus bed, being (vertically) spaced from the asparagus bed.

In order to achieve this in a simple manner, the further foil laying element extends further upward in comparison with the foil laying element, and preferably also further outward.

An inexpensive and simple construction of the foil laying element and/or the further foil layer element can be realised if said element(s) comprise(s) a guide section. The guide section preferably comprises a substantially downwardly extending first guide part and a second guide part disposed between the carrying means and the first guide part. Said second guide part extends substantially horizontally, at an angle relative to the first guide part.

The further foil laying element preferably comprises a third guide part which extends in downward direction from the second guide part between the carrying means and the second guide part. Said third guide part forms an upwardly sloping guide, on which the outer foil element first comes into contact with the further foil laying element, at least in use of the device.

In order to achieve a secure placement of the foil, it is preferable if the device comprises centring means provided near the foil separating means for centring holding elements provided near the asparagus bed.

According to one aspect of the invention, there is provided a mini-tunnel system for a device according to the invention, comprising an asparagus bed, a foil element placed on the asparagus bed, as well as a further foil element, which is held spaced from the asparagus bed by means of a multitude of holding elements placed in the longitudinal direction of the asparagus bed. According to this aspect of the invention, the foil element and/or the further foil element is/are provided with a multitude of longitudinally spaced mass elements on at least one longitudinal side thereof. The mass elements ensure that the foil element and/or the further foil element will automatically take on the correct shape upon coming into contact with the foil layers (foil laying element and further foil laying element, respectively). The outer side is forced down under the influence of the weights, for example in the form of bag-shaped containers filled with sand, for example, or with another suitable filling material. The foil laying element keeps the other part in place, such that the foil will take on a shape adapted to that of the asparagus bed.

The mini-tunnel system comprises a device according to the present invention, wherein said device is designed for placing the foil element on the asparagus bed and placing the further foil element over the holding elements.

According to one aspect of the invention, there is provided a method for lifting a foil element and a further foil element placed on or near an asparagus bed from the asparagus bed, and also for carrying the foil element and the further foil element back to the asparagus bed, wherein the method comprises the steps of providing an asparagus bed, a foil element placed on the asparagus bed and a further foil element, which is held spaced from the asparagus bed by means of a multitude of holding elements placed in the longitudinal direction of the asparagus bed. According to the invention, the method comprises the step of providing a device according to the invention and separating the foil element and the further foil element again by means of the foil separating means of said device at the location of the foil laying element when the foil element is being carried back to the asparagus bed.

In one embodiment of the method, the method comprises the step of turning over the foil element, preferably the black-white cover foil, at the location of the separating means, preferably at the location of the foil laying element.

Preferably, the method is carried out with a mini-tunnel system according to the invention as described above.

The invention will now be explained in more detail by means of a description of a preferred embodiment of a device according to the invention, in which reference is made to the following figures, in which:
Figures 1 a and 1 b are a side view and a top plan view, respectively, of the device according to the present invention;
Figure 2 is a rear view of the device shown in figures 1 a and 1b;
Figures 3a and 3b are detail views of the foil laying elements of the device shown in figure 1;
Figures 4a and 4b are a front view and a rear view, respectively, of a second embodiment of the device according to the present invention;
Figures 5a-c are a side view, a top plan view and a front view, respectively, of the device shown in figures 4a and 4b.

Like parts are indicated by the same numerals in the figures and the associated description.

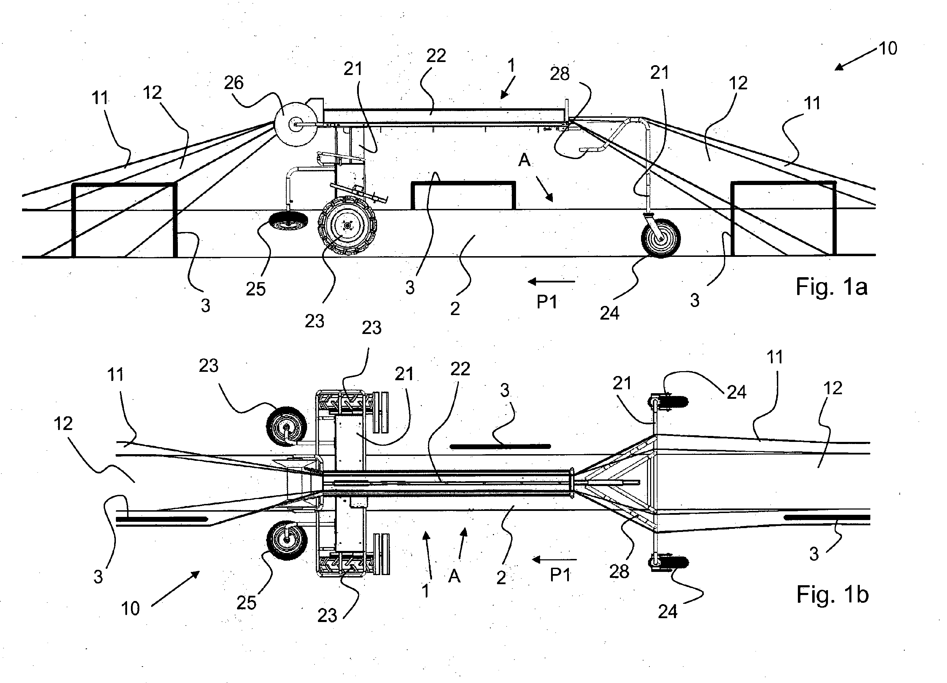

Figure 1 a and figure 1b show a device 1 for lifting and laying down foil elements 11, 12 for thus creating a working space A at the location of an asparagus bed 2. The asparagus bed 2 comprises holding elements 3 placed in a longitudinal direction of the asparagus bed, which holding elements are placed so that they extend only partially across the width of the asparagus bed 2. In the illustrated embodiment, the holding elements 3 comprise a U-shaped profile. Other embodiments are conceivable, of course, as long as the holding elements are designed so that the device 1 can be moved along the asparagus bed. For possible embodiments of such holding elements 3 reference is made to DE 10 2010 047 591 B3, which patent publication is fully incorporated herein by reference.

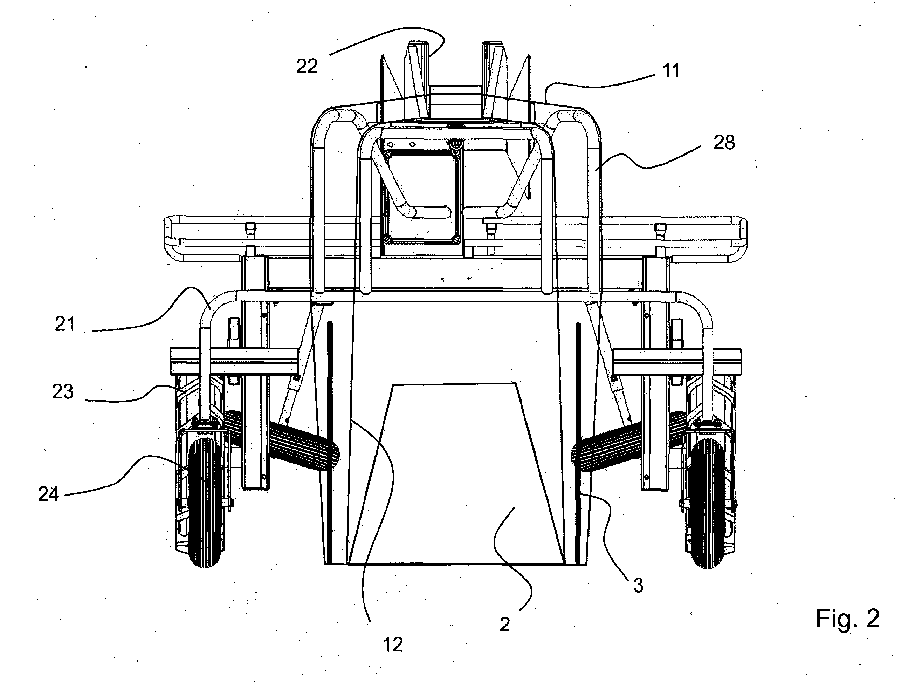

The device 1 comprises a frame 21 with front wheels 23 and rear wheels 24 on a bottom side thereof, which wheels are provided so that the device 1 can be moved in the longitudinal direction of the asparagus bed 2. The rear wheels 24 are preferably swivelling wheels, so that manoeuvring the device 1 will be easier. In an operative position of the device 1, the device is moved in the direction indicated by arrow P1. The device can be moved manually or by driving means (not shown) connected to the wheels 23, 24, for example in the form of an electric motor provided with a rechargeable battery. Such a drive system is known to the skilled person, for example from EP 1 062 863 A1. The frame 21 is further provided with guide wheels 25 disposed near the front wheels 23, which extend substantially in horizontal direction. As figure 2 clearly shows, the guide wheels 25 are provided in such a manner that they are placed substantially in line with the normal vector of the side of the asparagus bed 2.

With reference to figures 1 a and 1b again, the device 1 is designed for use in lifting and laying down foil elements 11, 12. The device 1 is to that end provided with carrying means 22 in the form of a gutter element 22, which is connected to the frame 21. The carrying means extend in a longitudinal direction of the device 1, from the front wheels 23 in the direction of the rear wheels 24. The carrying means 22 are vertically spaced from the upper side of the asparagus bed 2, such that a sufficiently large working space P is provided. At the front side of the device a lifting roller 26 is provided, via which the foil elements 11, 12 are lifted onto the carrying means 22. The lifting roller 26 is designed to rotate when the device 1 is being moved, so that the foil is transported toward the carrying means 22. During said transport, the longitudinal sides of the foil are moved toward each other in transverse direction, so that the foil can be introduced into the relatively narrow gutter element 22. The lifting roller 26 is to that end provided with a conical part on either side thereof, which conical parts cause the longitudinal sides to be moved toward each other and subsequently onto the carrying means 22. At the rear side of the device 1, a first foil laying element 27 (not shown in figure 1) and a second foil laying element 28 are connected to the frame 21. The first foil laying element 27 is designed for forming and laying the first foil element 12 (black-white cover foil) in a shape that is adapted to that of the asparagus bed. The second foil laying element 28 is designed for forming and laying the second foil element 12 (transparent foil) over the holding elements 3. The foil laying elements form separating means for separating the two foil elements from each other at the location of the foil laying element.

Figure 2 shows in more detail how the width of the cover foil 12 and the transparent foil 11 increases from the relatively narrow gutter element 22 as a result of the use of the foil laying element 27 (not shown) and the further foil laying element 28. The foils 11, 12 are preferably provided with a multitude of mass elements (not shown), which are provided on at least one longitudinal side of the foil and which cause the foil to be pulled taut over the foil laying element 27, 28, so that the foil is given the desired shape. The mass elements also ensure that the foil will remain in place after being laid and cannot be blown away, for example.

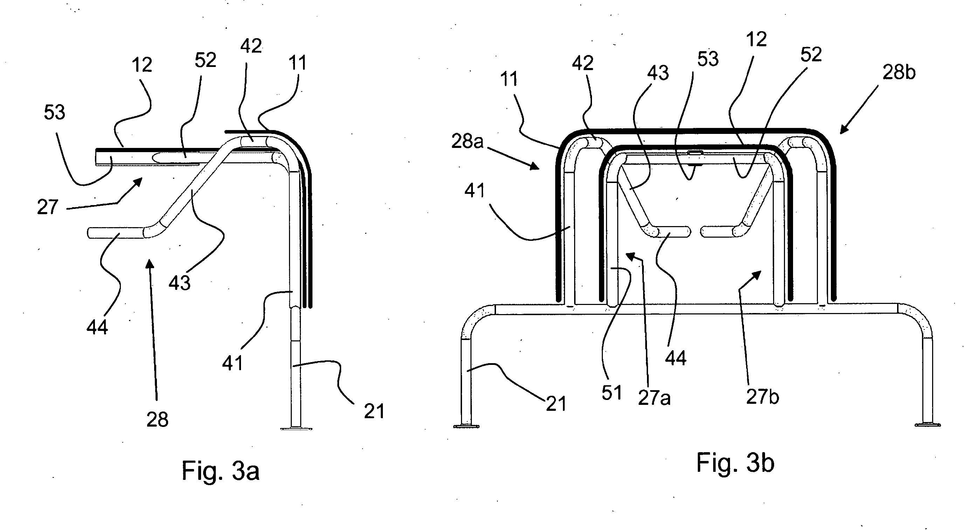

Figures 3a and 3b show details of the foil laying elements 27, 28. Figure 3a shows a side view analogous to the situation shown in figure 1 a. Figure 3b shows a rear view corresponding to the view shown in figure 2.

Figure 3a shows the further foil laying element 28 in more detail. The further foil laying element 28 comprises a section connected to the frame 21, comprising a first guide part 41 which extends in downward direction, seen from the front to the rear, substantially vertically in the illustrated embodiment. A second guide part 42 connects to the first guide part 41, extending at an angle thereto, substantially in horizontal direction in the illustrated embodiment. Said second guide part 42 preferably extends parallel to the plane formed by the carrying means 22 and is preferably also placed in line therewith. The further foil laying element 28 further comprises a third guide part 43 which extends forward and downward, at least initially so, from the second guide part 42 in the direction of the carrying means. Said part 43 forms a guide for partially receiving the sides of the transparent foil 11. At the end thereof, the third guide part 43 blends into a substantially horizontally extending end part 44.

Figure 3b shows that the foil laying element 28 in fact consists of two separate sections 28a, 28b, which are both connected to the frame 21. As the figure shows, the two separate sections 28a, 28b extend toward each other from respective outer sides of the device. The reason for this is that the second guide part 42, the third guide part 43 and the end part 44 of each section 28a, 28b essentially extend toward each other, in the direction of the longitudinal axis of the device 1.

Using the thus configured guide 28, the transparent foil 11, which is folded together in the gutter 22, is slowly unfolded to the width of the asparagus bed and subsequently lifted somewhat, so that the foil 11 will become detached from the underlying foil 12.

Figure 3b shows in more detail the first foil laying element 27, which comprises two sections 27a, 27b connected to the frame 21, each comprising an upright 51 (first guide part 51) that extends substantially vertically upward. At the upper side, each upright 51 continues into a second guide part 52 that extends at an angle to the upright 51. The guide parts 52 of the two sections 27a, 27b then extend toward each other from the rear to the front, coming together in a suspension rod 53 connected to the carrying means 22, which suspension rod forms part of the frame 21.

As figure 3b clearly shows, the second guide section 28a, 28b is placed further outward than the first guide section 27a, 27b. The first guide part 41 and the second guide part 42 are located on the outer side of the upright 51. The second guide section 28a, 28b is furthermore positioned higher than the first guide section, because the second guide part 42 of the second guide section 28 is positioned higher than the second guide part 52 of the first guide section 27a, 27b. This configuration ensures that the two foils 11, 12 will have the correct shape and will be separated from each other at the location of the foil laying elements. Placing the cover foil 12 with the desired side facing up is relatively simple, and placement of the cover foil 12 will then take place automatically during movement of the device in the longitudinal direction of the asparagus bed.

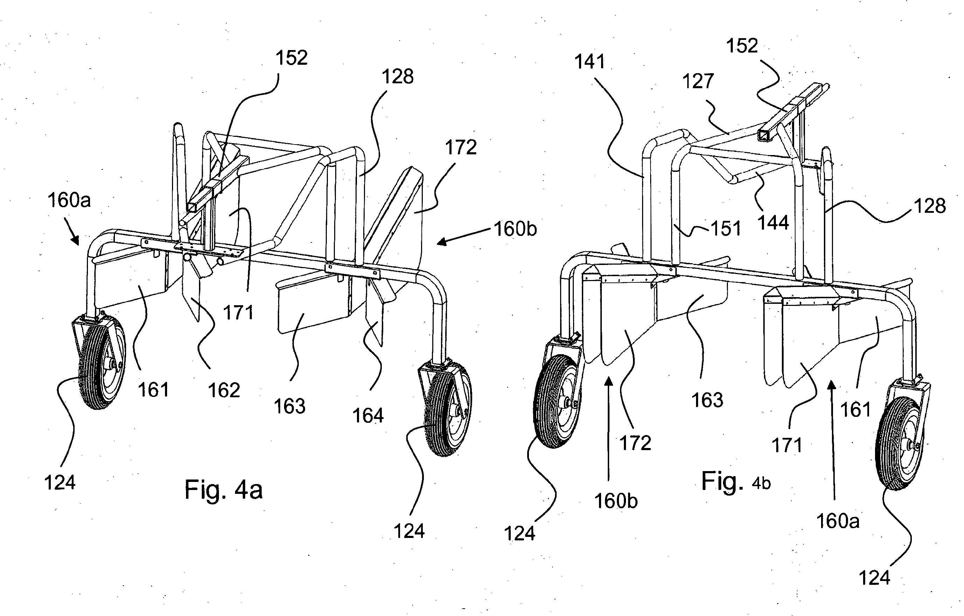

Figure 4a and figure 4b are views of a second embodiment of a device 1 according to the present invention, more specifically of the part of the device that comprises the foil laying element. This part of the device comprises a frame 121 with rear wheels 124 on a bottom side thereof, which wheels are mounted so that the device 1 can be moved in the longitudinal direction of the asparagus bed 2 (see figure 1). The rear wheels 124 are preferably swivelling wheels in this embodiment as well, so that manoeuvring the device 1 will be easier. It is noted that the operation of the second embodiment of the device is essentially the same as that of the device described with reference to figures 1-3.

At the rear side of the device 1, a first foil laying element 127 and a second foil laying element 128 are connected to the frame 121. Also in this embodiment, the first foil laying element 127 is designed for forming and placing the first foil element 11 (black-white cover foil) into a shape adapted to that of the asparagus bed. Also the second foil laying element 128 of this embodiment is designed for forming and laying the second foil element 12 (transparent foil) over the holding elements 3. The foil laying elements form separating means 127, 128 for separating the two foil elements from each other at the location of the foil laying element. Said foil laying elements (separating means) essentially correspond as regards their shape and function to foil laying elements (separating means) explained with reference to the preceding figures (in particular figures 3a and 3b).

The rear side of the device 1 shown in figures 4a and 4b further comprises centring means 160a, 160b, which are designed for centring the holding elements 3 disposed on either side of the asparagus bed. Each centring means 160a, 160b comprises a funnel-shaped opening defined by two side-by-side centring plates 161, 162; 163, 164, which are disposed at an angle relative to each other. The centring plates 161, 162; 163, 164 are present on a side directed toward the front side of the device. A centring gutter 171, 172 is provided at a rear side of this part of the device. Said centring gutter retains the holding element in place at the moment when the foil is moved downwards. Thus it is ensured that the foil is correctly arranged round the holding element 3 upon placement of the foil.

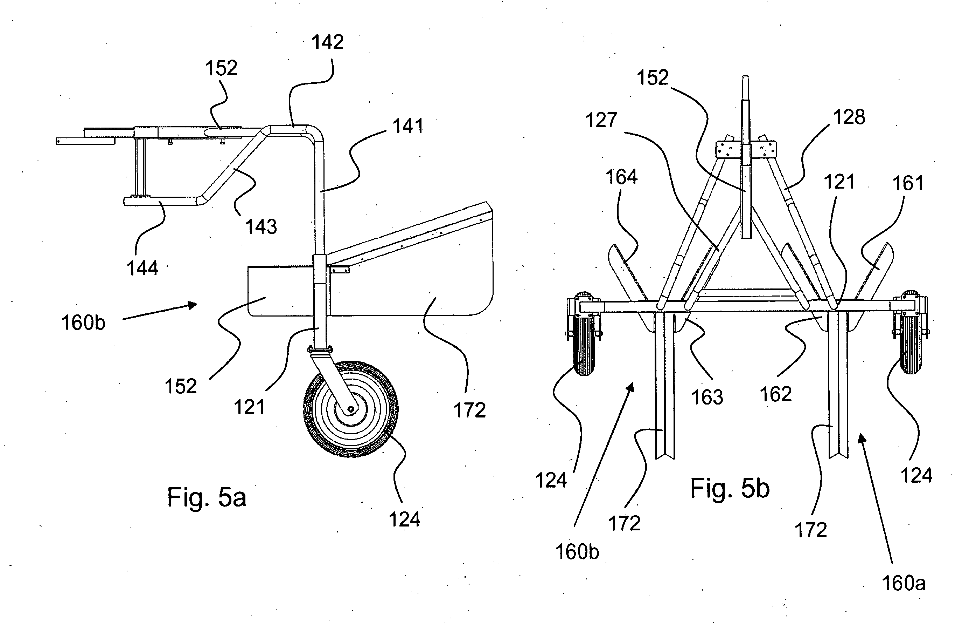

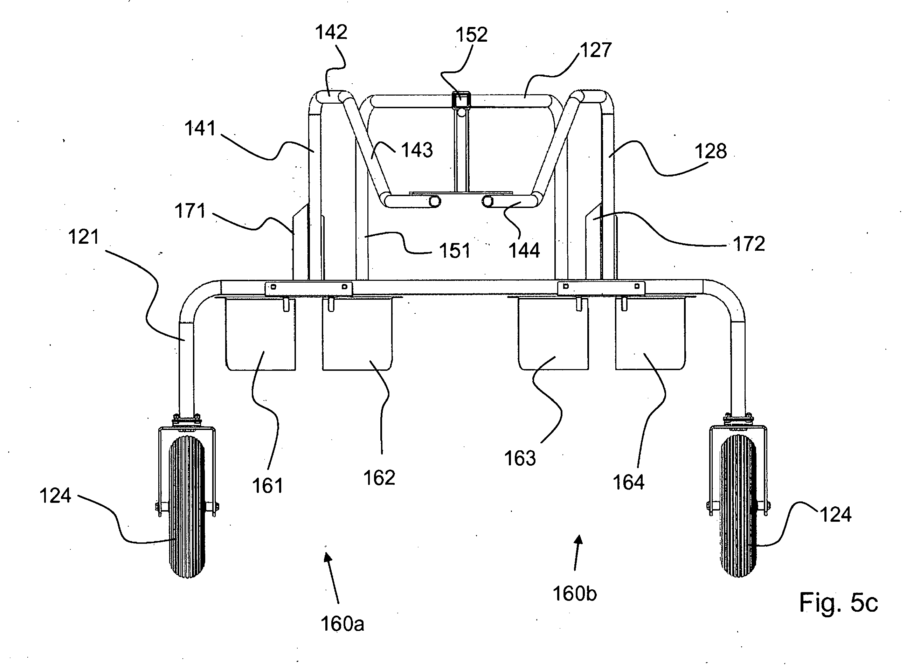

Figures 5a-5c show further details of the second embodiment of the device according to the present invention, showing clearly that it is essentially only different from the first embodiment in that centring means 160a, 160b are provided, each having a funnel-shaped inlet (formed by centring plates 161, 162, 163, 164) and a U-shaped centring gutter 171, 172.

The skilled person will appreciate that in the foregoing the invention has been described with reference to a few possible embodiments, which are preferred. The invention is not limited to said embodiments, however. Many equivalent modifications are conceivable within the scope of the invention. The scope of protection is defined by the appended claims.

## Claims

1. A device (1) for lifting a foil element (12) and a further foil element (11) placed on or near an asparagus bed (2) from said asparagus bed and for carrying back the foil element (12) and the further foil element (11) to the asparagus bed (2), the device (1) comprising a frame (21) which is movable in the longitudinal direction of the asparagus bed (2), as well as carrying means (22) connected to the frame (21) for holding the foil element (12) and the further foil element (11) spaced from the asparagus bed (2), wherein the device comprises a foil laying element (27) for giving the foil element (12) essentially the shape of the contour of the asparagus bed (2) when the foil element (12) is being carried back to the asparagus bed, **characterised in that** the device (1) is provided with foil separating means (27, 28) for separating the foil element (12) and the further foil element (11) from each other near the foil laying element (27) when the foil element (12) and the further foil element (11) are being carried back to the asparagus bed (2).

2. A device according to claim 1, **characterised in that** the foil separating means (27, 28) comprise a further foil laying element (28) spaced from the foil laying element (27) for giving the further foil element (11) a wider shape relative to the foil element (12).

3. A device according to claim 2, **characterised in that** the further foil laying element (28) extends further upward, and also further outward, in comparison with the foil laying element (27).

4. A device according to any one of the preceding claims, **characterised in that** the foil laying element (27) and/or the further foil laying element (28) comprise(s) a guide section (27a, 27b, 28a, 28b) comprising a substantially downwardly extending first guide part (41, 51) and a second guide part (42, 52) disposed between the carrying means (22) and the first guide part (41, 51), which second guide part extends substantially horizontally, at an angle relative to the first guide part (41, 51).

5. A device according to claim 4, **characterised in that** the further foil laying element (28) comprises a third guide part (53), which extends in downward direction from the second guide part (52) between the carrying means (22) and the second guide part (52).

6. A device according to any one of the preceding claims, **characterised in that** the device comprises centring means (160a, 160b) provided near the foil separating means (127, 128) for centring holding elements (3) provided near the asparagus bed (2).

7. A mini-tunnel system (10) for an asparagus bed (2), comprising a foil element (12) placed on the asparagus bed (2), as well as a further foil element (11), which is held spaced from the asparagus bed by means of a multitude of holding elements (3) placed in the longitudinal direction of the asparagus bed, wherein a device (1) according to any one of the preceding claims is movable in the longitudinal direction of the asparagus bed, **characterised in that** the mini-tunnel system comprises a device according to one or more of claims 1-6, wherein the device (1) is designed for placing the foil element (12) on the asparagus bed (2) and placing the further foil element (11) over the holding elements (3).

8. A mini-tunnel system (10) according to claim 7, **characterised in that** the foil element (12) and/or the further foil element (11) is/are provided with a multitude of longitudinally spaced mass elements on a longitudinal side thereof.

9. A method for lifting a foil element (12) and a further foil element (11) placed on or near an asparagus bed (2) from said asparagus bed and for carrying the foil element (12) and the further foil element (11) back to the asparagus bed (2), the method comprising the steps of providing an asparagus bed (2), a foil element (12) placed on the asparagus bed (2) and a further foil element (11), which is held spaced from the asparagus bed (2) by means of a multitude of holding elements (3) placed in the longitudinal direction of the asparagus bed (2), **characterised in that** the method comprises the step of providing a device (1) according to one of claims 1-6 and separating the foil element (12) and the further foil element (11) from each other again at the location of the foil laying element (27) by means of the foil separating means (27, 28) of said device (1) when the foil element (12) is being carried back to the asparagus bed (2).

10. A method according to claim 8, **characterised in that** the method comprises the step of turning over the foil element (12) at the location of the separating means (27, 28)

11. A method according to claim 9 or 10, **characterised in that** the method comprises the step of centring the holding elements (3) at the location of the separating means (127, 128).

12. A method according to claim 8, 9 or 10, **characterised in that** the method is carried out with a mini-tunnel system (10) according to claim 7 or 8.

## Patentansprüche

1. Vorrichtung (1) zum Anheben eines Folienelements (12) sowie eines weiteren Folienelements (11), die auf oder nahe einem Spargelbeet (2) liegen, von diesem Spargelbeet und zum Zurückführen des Folienelements (12) sowie des weiteren Folienelements (11) zum Spargelbeet (2), wobei die Vorrichtung (1) ein Gestell (21) umfasst, das in Längsrichtung des Spargelbeets (2) verfahrbar ist, sowie mit dem Gestell (21) verbundene Trageeinrichtungen (22) zum Halten des Folienelements (12) sowie des weiteren Folienelements (11) im Abstand vom Spargelbeet (2), wobei die Vorrichtung ein Folienauslegeelement (27) umfasst, um dem Folienelement (12) im Wesentlichen die Form der Kontur des Spargelbeets (2) zu geben, wenn das Folienelement (12) zurück zum Spargelbeet geführt wird, **dadurch gekennzeichnet, dass** an der Vorrichtung (1) Folientrenneinrichtungen (27, 28) vorgesehen sind, um das Folienelement (12) sowie das weitere Folienelement (11) nahe dem Folienauslegeelement (27) voneinander zu trennen, wenn das Folienelement (12) sowie das weitere Folienelement (11) zurück zum Spargelbeet (2) geführt werden.

2. Vorrichtung nach Anspruch 1, **dadurch gekennzeichnet, dass** die Folientrenneinrichtungen (27, 28) ein weiteres Folienauslegeelement (28) umfassen, das von dem Folienauslegeelement (27) beabstandet ist, um dem weiteren Folienelement (11) eine im Verhältnis zum Folienelement (12) breitere Form zu geben.

3. Vorrichtung nach Anspruch 2, **dadurch gekennzeichnet, dass** das weitere Folienauslegeelement (28) sich im Vergleich zum Folienauslegeelement (27) weiter nach oben und auch weiter nach außen erstreckt.

4. Vorrichtung nach einem der vorangehenden Ansprüche, **dadurch gekennzeichnet, dass** das Folienauslegeelement (27) und/oder das weitere Folienauslegeelement (28) einen Führungsabschnitt (27a, 27b, 28a, 28b) umfasst bzw. umfassen, der ein sich im Wesentlichen abwärts erstreckendes erstes Führungsteil (41, 51) und ein zweites Führungsteil (42, 52) umfasst, das zwischen den Trageeinrichtungen (22) und dem ersten Führungsteil (41, 51) angeordnet ist, wobei sich das zweite Führungsteil im Wesentlichen horizontal, in einem Winkel relativ zum ersten Führungsteil (41, 51) erstreckt.

5. Vorrichtung nach Anspruch 4, **dadurch gekennzeichnet, dass** das weitere Folienauslegeelement (28) ein drittes Führungsteil (53) umfasst, das sich in einer Abwärtsrichtung von dem zweiten Führungsteil (52) zwischen den Trageeinrichtungen (22) und dem zweiten Führungsteil (52) erstreckt.

6. Vorrichtung nach einem der vorangehenden Ansprüche, **dadurch gekennzeichnet, dass** die Vorrichtung Zentriereinrichtungen (160a, 160b) umfasst, die nahe der Folientrenneinrichtungen (127, 128) vorgesehen sind, um Halteelemente (3) zu zentrieren, die nahe dem Spargelbeet (2) vorgesehen sind.

7. Minitunnelsystem (10) für ein Spargelbeet (2), mit einem Folienelement (12), das auf dem Spargelbeet (2) liegt, sowie einem weiteren Folienelement (11), das mittels einer Vielzahl von Halteelementen (3), die in Längsrichtung des Spargelbeets platziert sind, vom Spargelbeet beabstandet gehalten wird, wobei eine Vorrichtung (1) nach einem der vorhergehenden Ansprüche in Längsrichtung des Spargelbeets verfahrbar ist, **dadurch gekennzeichnet, dass** das Minitunnelsystem eine Vorrichtung nach einem oder mehreren der Ansprüche 1 bis 6 umfasst, wobei die Vorrichtung (1) dazu gestaltet ist, das Folienelement (12) auf das Spargelbeet (2) zu legen und das weitere Folienelement (11) über die Halteelemente (3) zu legen.

8. Minitunnelsystem (10) nach Anspruch 7, **dadurch gekennzeichnet, dass** das Folienelement (12) und/oder das weitere Folienelement (11) an einer Längsseite mit einer Vielzahl von in Längsrichtung beabstandeten Masseelementen versehen ist/sind.

9. Verfahren zum Anheben eines Folienelements (12) sowie eines weiteren Folienelements (11), die auf oder nahe einem Spargelbeet (2) liegen, von diesem Spargelbeet und zum Zurückführen des Folienelements (12) sowie des weiteren Folienelements (11) zum Spargelbeet (2), wobei das Verfahren die Schritte umfasst, ein Spargelbeet (2), ein Folienelement (12), das auf dem Spargelbeet (2) liegt, sowie ein weiteres Folienelement (11) bereitzustellen, das mittels einer Vielzahl von Halteelementen (3), die in Längsrichtung des Spargelbeets (2) platziert sind, vom Spargelbeet (2) beabstandet gehalten wird, **dadurch gekennzeichnet, dass** das Verfahren den Schritt umfasst, eine Vorrichtung (1) nach einem der Ansprüche 1 bis 6 bereitzustellen sowie das Folienelement (12) und das weitere Folienelement (11) an der Stelle des Folienauslegeelements (27) mittels der Folientrenneinrichtungen (27, 28) der Vorrichtung (1) wieder voneinander zu trennen, wenn das Folienelement (12) zum Spargelbeet (2) zurückgeführt wird.

10. Verfahren nach Anspruch 8, **dadurch gekennzeichnet, dass** das Verfahren den Schritt umfasst, das Folienelement (12) an der Stelle der Trenneinrichtungen (27, 28) umzudrehen.

11. Verfahren nach Anspruch 9 oder 10, **dadurch gekennzeichnet, dass** das Verfahren den Schritt umfasst, die Halteelemente (3) an der Stelle der Trenneinrichtungen (127, 128) zu zentrieren.

12. Verfahren nach Anspruch 8, 9 oder 10, **dadurch gekennzeichnet, dass** das Verfahren mit einem Minitunnelsystem (10) nach Anspruch 7 oder 8 durchgeführt wird.

## Revendications

1. Dispositif (1) de levage d'un élément en feuille (12) et d'un élément en feuille supplémentaire (11) placé sur ou près d'un lit d'asperges (2) à partir dudit lit d'asperges et de renvoi de l'élément en feuille (12) et de l'élément en feuille supplémentaire (11) vers le lit d'asperges (2), le dispositif (1) comprenant un cadre (21) qui est mobile dans la direction longitudinale du lit d'asperges (2), ainsi qu'un moyen porteur (22) raccordé au cadre (21) permettant de tenir l'élément en feuille (12) et l'élément en feuille supplémentaire (11) espacés du lit d'asperges (2), dans lequel le dispositif comprend un élément de pose de feuille (27) permettant de donner à l'élément en feuille (12) essentiellement la forme du contour du lit d'asperges (2) lorsque l'élément en feuille (12) est renvoyé vers le lit d'asperges, **caractérisé en ce que** le dispositif (1) est doté d'un moyen de séparation de feuille (27, 28) permettant de séparer l'élément en feuille (12) et l'élément en feuille supplémentaire (11) l'un de l'autre près de l'élément de pose de feuille (27) lorsque l'élément en feuille (12) et l'élément en feuille supplémentaire (11) sont renvoyés vers le lit d'asperges (2).

2. Dispositif selon la revendication 1, **caractérisé en ce que** le moyen de séparation de feuille (27, 28) comprend un élément de pose de feuille supplémentaire (28) espacé de l'élément de pose de feuille (27) pour donner à l'élément en feuille supplémentaire (11) une forme plus large que l'élément en feuille (12).

3. Dispositif selon la revendication 2, **caractérisé en ce que** l'élément de pose de feuille supplémentaire (28) s'étend plus encore vers le haut, et également plus encore vers l'extérieur, en comparaison avec l'élément de pose de feuille (27).

4. Dispositif selon l'une quelconque des revendications précédentes, **caractérisé en ce que** l'élément de pose de feuille (27) et/ou l'élément de pose de feuille supplémentaire (28) comprend/comprennent une section guide (27a, 27b, 28a, 28b) comprenant une première partie guide s'étendant sensiblement vers le bas (41, 51) et une deuxième partie guide (42, 52) disposée entre le moyen porteur (22) et la première partie guide (41, 51), laquelle deuxième partie guide s'étend sensiblement horizontalement, selon un angle par rapport à la première partie guide (41, 51).

5. Dispositif selon la revendication 4, **caractérisé en ce que** l'élément de pose de feuille supplémentaire (28) comprend une troisième partie guide (53), qui s'étend dans une direction vers le bas depuis la deuxième partie guide (52) entre le moyen porteur (22) et la deuxième partie guide (52).

6. Dispositif selon l'une quelconque des revendications précédentes, **caractérisé en ce que** le dispositif comprend un moyen de centrage (160a, 160b) ménagé près du moyen de séparation de feuille (127, 128) pour centrer des éléments de tenue (3) ménagés près du lit d'asperges (2).

7. Système mini-tunnel (10) pour un lit d'asperges (2), comprenant un élément en feuille (12) placé sur le lit d'asperges (2), ainsi qu'un élément en feuille supplémentaire (11), qui est tenu espacé du lit d'asperges au moyen d'une multitude d'éléments de tenue (3) placés dans la direction longitudinale du lit d'asperges, dans lequel un dispositif (1) selon l'une quelconque des revendications précédentes est mobile dans la direction longitudinale du lit d'asperges, **caractérisé en ce que** le système mini-tunnel comprend un dispositif selon une ou plusieurs des revendications 1 à 6, dans lequel le dispositif (1) est conçu pour placer l'élément en feuille (12) sur le lit d'asperges (2) et placer l'élément en feuille supplémentaire (11) par-dessus les éléments de tenue (3).

8. Système mini-tunnel (10) selon la revendication 7, **caractérisé en ce que** l'élément en feuille (12) et/ou l'élément en feuille supplémentaire (11) est/sont doté(s) d'une multitude d'éléments de masse espacés longitudinalement sur un côté longitudinal de celui-ci/ceux-ci.

9. Procédé de levage d'un élément en feuille (12) et d'un élément en feuille supplémentaire (11) placés sur ou près d'un lit d'asperges (2) à partir dudit lit d'asperges et de renvoi de l'élément en feuille (12) et de l'élément en feuille supplémentaire (11) vers le lit d'asperges (2), le procédé comprenant les étapes de fourniture d'un lit d'asperges (2), d'un élément en feuille (12) placé sur le lit d'asperges (2) et d'un élément en feuille supplémentaire (11), qui est tenu espacé du lit d'asperges (2) au moyen d'une multitude d'éléments de tenue (3) placés dans la direction longitudinale du lit d'asperges (2), **caractérisé en ce que** le procédé comprend l'étape de fourniture d'un dispositif (1) selon l'une des revendications 1 à 6 et de séparation de l'élément en feuille (12) et de l'élément en feuille supplémentaire (11) l'un de l'autre à nouveau à l'emplacement de l'élément de pose de feuille (27) à l'aide du moyen de séparation de feuille (27, 28) dudit dispositif (1) lorsque l'élément en feuille (12) est renvoyé vers le lit d'asperges (2).

10. Procédé selon la revendication 8, **caractérisé en ce que** le procédé comprend l'étape de retournement de l'élément en feuille (12) à l'emplacement du moyen de séparation (27, 28).

11. Procédé selon la revendication 9 ou 10, **caractérisé en ce que** le procédé comprend l'étape de centrage des éléments de tenue (3) à l'emplacement du moyen de séparation (127, 128).

12. Procédé selon la revendication 8, 9 ou 10, **caractérisé en ce que** le procédé est réalisé avec un système mini-tunnel (10) selon la revendication 7 ou 8.
